# EUROPÄISCHE PATENTSCHRIFT

(11) **EP 2 460 833 B1**
(45) Veröffentlichungstag und Bekanntmachung des Hinweises auf die Patenterteilung: **15.05.2019**
(21) Anmeldenummer: 10014382.5
(22) Anmeldetag: 08.11.2010
(51) Int. Cl.: C08G 63/90, C08G 64/40, C08G 69/00, C08G 75/0277, C08G 75/0281, B29B 9/16

(54) **Verfahren zur Reinigung von Polymergranulat**
Method for purifying polymer granulate
Procédé de nettoyage de granulés polymères

(43) Veröffentlichungstag der Anmeldung: 06.06.2012
(73) Patentinhaber: EMS-Patent AG, 7013 Domat/Ems (CH)
(72) Erfinder: Kaplan, Andreas, Dr., 7000 Chur (CH); Casper, Thomas, Dr., 7013 Domat/Ems (CH)
(74) Vertreter: Pfenning, Meinig & Partner mbB

(56) Entgegenhaltungen:
- EP-A1- 0 284 968
- DE-B- 1 159 649
- GB-A- 1 067 482
- US-A- 4 332 933

## Beschreibung

Die vorliegende Erfindung betrifft ein Verfahren zur Herstellung von gereinigtem Polymergranulat durch Extraktion eines Reststoff enthaltenden Polymergranulats in der Weise, dass das Polymergranulat in einem Wirbelbett mit überhitztem Wasserdampf behandelt wird. Die Erfindung betrifft weiterhin die Verwendung dieses Polymergranulats für die Herstellung hochwertiger Teile, an die hohe Reinheitsanforderungen gestellt werden.

Im Stand der Technik sind bisher schon zahlreiche Versuche unternommen worden, Polymere bei der Herstellung oder durch nachfolgende Prozesse von Lösungsmitteln, Monomeren und/oder Oligomeren und/oder Nebenprodukten zu befreien, um ein möglichst reines Produkt herzustellen, das dann in den Eigenschaften nicht durch Reststoffe beeinflusst wird.

So beschreibt die EP 0 722 954 B1 ein Verfahren zur Reduzierung der Konzentration von flüchtigen Rückständen, wie z.B. unpolymerisierten Monomeren, von thermoplastischen Kunstharzen durch Extrudieren der besagten Kunstharze in einem belüfteten Extruder, zusammen mit einem chemischen Blasmittel, wie z.B. Kohlendioxid. Nachteilig bei einem derartigen Verfahren ist allerdings, dass es sich um ein sehr aufwändiges Verfahren im Extruder handelt und dass zudem durch den Einsatz des Blasmittels während des Extrusionsprozesses nicht sichergestellt werden kann, dass damit auch ein hoher Reinheitsgrad der herzustellenden Polymergranulate erreicht werden kann.

Aus der DE 43 26 468 A1 ist weiterhin die Verwendung von überhitztem Wasserdampf zur Trocknung von Wertstoffen und temperatursensitiven Wertstoffgemischen und damit hergestellten Trockenprodukten bekannt. Bei diesem Verfahren ist auch vorgesehen, dass die Behandlung des Wertstoffes mehrstufig erfolgt, wobei dann für diesen Fall wenigstens eine dieser Verarbeitungsstufen eine Wirbelschichttrocknung der Wertstoffe in überhitztem Wasserdampf umfasst. Gemäß der Lehre der DE 43 26 468 A1 werden als Wertstoffe, die zu trocknen sind, ausschließlich Nährstoffe, insbesondere Lebensmittel (Nahrungs- und Genussmittel) vorgeschlagen. Der Offenbarungsgehalt der vorstehend erwähnten Offenlegungsschrift bietet allerdings für den Fachmann keinerlei Ansatzpunkte, das dort beschriebene Verfahren, das ausschließlich auf Nährstoffe gerichtet ist, nun auf Polymergranulate anzuwenden.

Weiterhin ist aus der EP 0 379 684 ein Verfahren und eine Vorrichtung zur kontinuierlichen Kristallisation von Polyestermaterial bekannt. Bei diesem Verfahren wird vorgeschlagen, zur kontinuierlichen Kristallisation von Polyestermaterial, wie z.B. Granulaten, das Polyestermaterial durch zwei hintereinander geschaltete Wirbelbette zu führen, wobei die beiden Wirbelbette in ihrer Mischcharakteristik unterschiedlich ausgestaltet sind. Hinweise auf eine Verfahrensführung zur Extraktion mit überhitztem Wasserdampf finden sich in der EP 0 379 684 nicht.

Aus der US 4,332,933 ist ein Verfahren zur Verminderung eines Gehaltes an Katalysatorresten, Halogenhaltigen Verbindungen und organischen Substanzen in kristallinen olefinischen Homo- und Copolymeren bekannt.

Die EP 0 284 968 A1 beschreibt ein Verfahren zur Entfernung von Caprolactam und dessen Oligomeren aus solches enthaltendem Polyamidgranulat.

Die DE 11 59 649 B beschreibt ein Verfahren zur Entfernung von Lösungsmittel aus Mischpolymerisaten des Maleinsäureanhydrids durch Wasserdampfdestillation.

Aus der GB 1 067 482 A ist ein Verfahren zur Deaktivierung von Katalysatorresten in polykolen Wasserstoffen mit hohen Molmassen bekannt.

Ausgehend hiervon ist es die Aufgabe der vorliegenden Erfindung, ein neues Verfahren vorzuschlagen, mit dem es möglich ist, verfahrenstechnisch einfach Polymergranulate in der Weise zu reinigen, dass sie einen minimalen Restgehalt an Reststoffen, wie z.B. Lösungsmittel und/oder Monomere und/oder Oligomere und/oder Nebenprodukte der Polymersynthese aufweisen. Eine weitere Aufgabe der vorliegenden Erfindung ist es, eine Verwendung derartiger gereinigter Polymergranulate anzugeben.

Diese Aufgabe wird bezüglich des Verfahrens zur Herstellung von gereinigtem Polymergranulat mit den Merkmalen des Patentanspruchs 1 gelöst. Die abhängigen Patentansprüche stellen dabei vorteilhafte Weiterbildungen dar.

Von den Erfindern wurde festgestellt, dass Polymergranulat, das Reststoffe enthält, in einem Wirbelbett mit überhitztem Wasserdampf und dabei erfolgender Entfernung der Reststoffe effektiv gereinigt werden kann. Überraschenderweise hat es sich nun gezeigt, dass mit einem derartigen Verfahren, das nachfolgend als Heißdampf-Wirbelschichtextraktion bezeichnet wird, auch bei Temperaturen bis nahe an die Glasübergangstemperaturen der behandelten Polymere, insbesondere auch bei amorphen Polymeren, ohne Verbacken der Polymergranulate eine Extraktion durchgeführt werden kann. Ein weiterer Vorteil des erfindungsgemäßen Verfahrens besteht darin, dass durch die hohen Temperaturen, die bei der Heißdampf-Wirbelschichtextraktion realisierbar sind, die Extraktion wesentlich schneller durchführbar ist, als dies bisher aus dem Stand der Technik bekannt ist. Beim erfindungsgemäßen Verfahren ist noch weiterhin hervorzuheben, dass der überhitzte Wasserdampf, der bei der Extraktion eingesetzt wird, auch als Schutzgas fungiert, so dass keine Schädigung (falls die Hydrolyse vernachlässigbar ist), insbesondere keine oxidative Schädigung der Polymergranulate während des Behandlungsprozesses eintritt. Weiterhin wird die Explosionsgefahr gesenkt. Auch zeichnet sich das Verfahren dadurch aus, dass es dann, wenn der Wasserdampf z.B. im Kreislauf geführt wird, nur einen geringen Energieverbrauch hat.

Beim erfindungsgemäßen Verfahren wird die Wirbelschicht mit überhitztem Wasserdampf, je nach zu behandelndem Polymergranulat, auf einer Temperatur von 170 bis 225 °C und bevorzugt 200 bis 225 °C gehalten. Durch die Verfahrensführung mit dem überhitzten Wasserdampf wird somit gewährleistet, dass die Extraktion mit einer hohen Temperatur durchgeführt werden kann, so dass nicht nur eine besonders schnelle Trocknung, sondern auch eine effektive Trocknung erreicht werden kann. Die Behandlung im Wirbelbett wird dabei je nach angestrebtem Restgehalt an Reststoff über eine Zeitdauer von 2,5 bis 10 Stunden, bevorzugt 3,5 bis 9 Stunden, besonders bevorzugt 5 bis 7 Stunden, durchgeführt.

Je nach Verfahrensführung kann damit eine Entfernung des oder der Reststoffe von mindestens 80 %, bevorzugt mindestens 90 %, besonders bevorzugt mindestens 95 %, und ganz besonders bevorzugt von mindestens 99 % des Anfangsgehaltes der Reststoffe oder einzelner Reststoffe erreicht werden.

Wesentlich beim erfindungsgemäßen Verfahren ist es, dass das Polymergranulat in einer Wirbelschicht mit überhitztem Wasserdampf behandelt wird (Heißdampf-Wirbelschichtextraktion). Zur Erzeugung der Wirbelschicht wird das zu behandelnde Gut, in diesem Fall das Polymergranulat, durch Anströmen mit überhitztem Wasserdampf, über einem Anströmboden (z.B. einem gelochten Boden) in einem fluidisierten Zustand gehalten, in welchem eine Bewegung und Verwirbelung der Granulate stattfindet. Die Wirbelschicht wird dann gebildet, wenn ein bestimmter Grenzwert der Geschwindigkeit des von unten durchströmenden Gases, d.h. in diesem Fall des Wasserdampfs, gegen die Schwerkraft der Granulate erreicht wird. Dieser Punkt, an dem die ruhende in eine wirbelnde Schicht, d.h. das Festbett in eine Wirbelschicht übergeht, wird auch als Wirbelpunkt bezeichnet. Das Erreichen dieses Punktes hängt von einer Reihe physikalischer Faktoren, die dem Fachmann bekannt sind, ab, wie z.B. Dichte, Größe, Verteilung und Form der Teilchen. Für das erfindungsgemäße Verfahren können dabei kommerzielle Wirbelschichtanlagen verwendet werden. Diese können kontinuierlich oder batchweise betrieben werden.

Die Ausdrucksweise "in einer Wirbelschicht" oder "in einem Wirbelbett" ist bei der vorliegenden Erfindung so zu verstehen, dass das Verfahren sowohl in einer einzigen Wirbelschichtkammer durchgeführt werden kann, dass aber in einer anderen Variante auch eine mehrstufige Fahrweise mit mehreren Wirbelschichtkammern möglich ist, d.h. dass die Wirbelschichtanlage in mindestens zwei hintereinander geschaltete Wirbelschichtkammern aufgeteilt sein kann.

Beim erfindungsgemäßen Verfahren ist es bevorzugt, wenn, insbesondere für den kontinuierlichen Betrieb, mit mindestens zwei hintereinander geschalteten Wirbelschichtkammern gearbeitet wird. Diese können entweder in einem Gehäuse oder in hintereinander geschalteten Wirbelschichtapparaten angeordnet sein. Bei dieser Ausführungsform werden die Granulate dann von einer Kammer in die nächste überführt. Der überhitzte Wasserdampf kann dabei entweder im Gegenstrom durch die Kaskade geführt werden, oder aber die Kammern haben separate Gaskreisläufe. In letzterem Fall ist es bevorzugt, die letzte Wirbelschichtkammer mit frischem Wasserdampf zu betreiben (statt im Kreislauf mit rezirkuliertem Wasserdampf aus den vorherigen Wirbelschichtkammern), um am Schluss im ReststoffGehalt auf tiefstmögliche Werte zu kommen.

Das erfindungsgemäße Verfahren ist für Polymergranulate, die ausgewählt sind aus Poly(arylether)sulfonen, Polyamiden, Polyestern, Polycarbonaten und Polyketonen anwendbar. Es hat sich weiterhin gezeigt, dass das Verfahren für Poly(arylether)sulfongranulate besonders geeignet ist. Poly(arylether)sulfone werden vereinfacht auch als Polysulfone bezeichnet. Unter Polysulfonen sollen bei der vorliegenden Erfindung alle Poly(arylether)sulfone verstanden werden, insbesondere die Haupttypen PSU, PESU und PPSU. PSU ist die Ab-Abkürzung für das ursprüngliche Polysulfon mit Bisphenol A. Die Abkürzung PESU steht für Polyethersulfon. PPSU ist Polyphenylensulfon.

Das Verfahren ist zudem auch in Bezug auf die Reststoffe für viele Reststoffe, die bei den zuvor genannten Polymergranulaten vorhanden sein können, anwendbar. Reststoffe im Sinne der Erfindung sind demnach z.B. Lösungsmittel und/oder Monomere und/oder Oligomere und/oder Nebenprodukte der Polymersynthese.

Lösungsmittel, die sich mit dem erfindungsgemäßen Verfahren besonders vorteilhaft entfernen lassen, sind z.B. Lösungsmittel oder Lösungsmittelgemische aus der Gruppe N-Methylpyrrolidon (NMP), N-Ethylpyrrolidon (NEP), Sulfolan, Dimethylformamid (DMF), Dimethylsulfoxid (DMSO), Dimethylacetamid (DMAC) und 1,2-Dichlorbenzol.

Derartige Lösungsmittel lassen sich dann je nach Verfahrensbedingungen mit dem erfindungsgemäßen Verfahren in der Wirbelschicht bis zur Erreichung eines Restgehaltes an Lösungsmittel von < 10 ppm, bevorzugt von < 5 ppm, entfernen.

Beschrieben werden ferner die mit dem erfindungsgemäßen Verfahren hergestellten Polymergranulate.

Die Polymergranulate, die mit dem erfindungsgemäßen Verfahren hergestellt werden, lassen sich somit für Anwendungen hochwertiger Teile, an die hohe Reinheitsanforderungen gestellt werden, verwenden. Beispiele hierfür sind Teile in Kontakt mit Lebensmitteln, Trinkwasser oder medizinischen Produkten, oder Teile für optische und elektronische Anwendungen.

Die Erfindung wird anhand eines Ausführungsbeispiels und zweier Figuren näher beschrieben, ohne die Erfindung auf die dort dargestellten speziellen Parameter zu beschränken.
Figur 1 zeigt schematisch den Aufbau einer gängigen Wirbelschichtanlage.
Figur 2 zeigt in Form einer Graphik die Ergebnisse einer repräsentativen Heißdampf-Wirbelschichtextraktion von NMP aus einem Polysulfon.

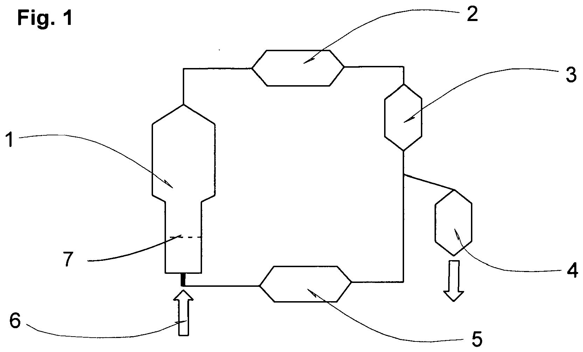

In Figur 1 ist schematisch der Aufbau einer gängigen Wirbelschichtanlage dargestellt, die mit überhitztem Wasserdampf betrieben wird. Die beispielhaft in Figur 1 schematisch dargestellte Wirbelschichtanlage besteht aus einer Wirbelschichtkammer 1, die über eine Kreislaufleitung mit einem Staubabscheider 2, der mit einem Gebläse 3 verbunden ist, besteht. Das Gebläse 3 ist dabei über einen Erhitzer 5 wiederum mit der Wirbelschichtkammer 1 verbunden. Bei der Ausführungsform nach der Figur 1 ist mit 4 dann der Kondensator mit Kondensatabfuhr bezeichnet.

Die Wirbelschichtkammer 1 ist vorzugsweise durch ein zylindrisches Rohr gebildet, das oben einen erweiterten Querschnitt aufweist. Der überhitzte Wasserdampf (die Dampfzufuhr für den Frischdampf ist mit 6 bezeichnet) wird durch den gelochten Anströmboden 7, der den unteren Abschluss der Wirbelschichtkammer 1 bildet, in die Wirbelschichtkammer 1 eingeführt. Durch entsprechende Einstellung der Verfahrensparameter, d.h. durch die Anströmungsgeschwindigkeit des überhitzten Wasserdampfs in Kombination mit der Masse des Granulates und der Größe der Granulatkörner in der Wirbelschicht wird das Granulat über dem Lochboden 7 im fluidisierten Zustand gehalten, und unerwünschte Reststoffe werden durch den durchströmenden Dampf extrahiert. Nach dem Durchtritt des Dampfs durch die Wirbelschicht wird ein Teil des Dampfes (der sogenannte Treibdampf) mitsamt den darin enthaltenen, mitgeführten Reststoffen kondensiert und aus dem Kreislauf-System ausgeschleift. Der Kreislauf wird ständig durch einen entsprechenden Anteil zugeführten Frischdampf 6 aufgefrischt, damit einerseits die Konzentration der Reststoffe in der Dampfphase nicht zu hoch ansteigt, und andererseits muss der aus dem System ausgeschleuste Treibdampf durch frischen Dampf ersetzt werden, damit eine genügende, konstante Dampfmenge im System zur Aufrechterhaltung der Wirbelschicht als Zirkulationsdampf zur Verfügung steht.

Mit einer Wirbelschichtapparatur wie vorstehend beschrieben (Durchmesser der Lochscheibe = 200 mm) wurde der Reststoff NMP aus einem Polysulfon-Granulat des Typs PPSU (Polyphenylensulfon) entfernt. Der Ausgangs-NMP-Gehalt des Polysulfons betrug 0,4 %.

Die Versuchseinstellungen waren wie folgt:
Dampftemperatur: 220 °C
Innendruck: 0,05-0,1 bar(ü)
Füllmenge: 1 kg
Extraktionsdauer: 8 h
Zirkulationsdampfstrom: 100 kg/h
Treibdampfstrom: 15-20 kg/h
Der spezifizierte NMP-Gehalt wurde nach 5 Stunden erreicht.

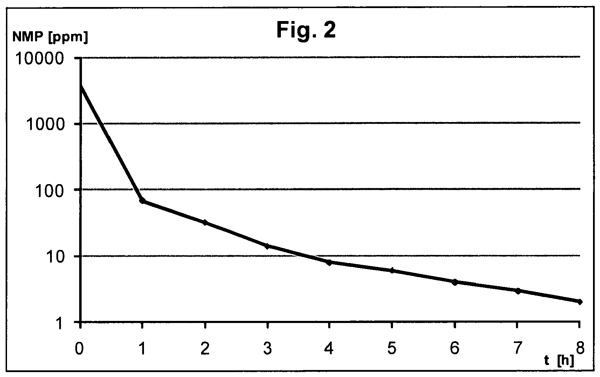

Die Ergebnisse, d.h. die Abnahme des NMP-Gehalts im Granulat über die Zeit, sind in Figur 2 zusammengestellt.
Wie Figur 2 zeigt, kann mit dem erfindungsgemäßen Verfahren überraschenderweise der Gehalt an Reststoff bereits nach einer Zeit von 5 Stunden auf den angestrebten Wert von 5 ppm NMP reduziert werden.

Im Vergleich dazu führt eine aus dem Stand der Technik bekannte Heißdampfextraktion, die nur bis zu einer Temperatur bis maximal 170 °C durchgeführt werden kann, da ansonsten die Granulate im Festbett verbacken, in vergleichbarer Zeit nur zu einem Restgehalt an NMP von 200 bis 400 ppm.

## Patentansprüche

1. Verfahren zur Herstellung von gereinigtem Polymergranulat durch Extraktion eines Reststoff enthaltenden Polymergranulats ausgewählt aus Poly(arylether)sulfonen, Polyamiden, Polyestern, Polycarbonaten und Polyketonen, bei dem das Polymergranulat in einem Wirbelbett mit überhitztem Wasserdampf auf einer Temperatur von 170 bis 225 °C gehalten wird und die Behandlung im Wirbelbett über eine Zeitdauer von 2,5 bis 10 h durchgeführt wird und die Reststoffe entfernt werden.

2. Verfahren nach Anspruch 1, **dadurch gekennzeichnet, dass** das Wirbelbett mit überhitztem Wasserdampf auf einer Temperatur 200 bis 225 °C gehalten wird.

3. Verfahren nach Anspruch 1 oder 2, **dadurch gekennzeichnet, dass** die Behandlung im Wirbelbett über eine Zeitdauer von 3,5 bis 9 h durchgeführt wird.

4. Verfahren nach mindestens einem der Ansprüche 1 bis 3, **dadurch gekennzeichnet, dass** das Verfahren in einer Wirbelschichtanlage unter Bewegung und Verwirbelung der Granulate, durch den von unten durch einen Anströmboden und die Granulatschicht durchströmenden überhitzten Wasserdampf, durchgeführt wird.

5. Verfahren nach einem der Ansprüche 1 bis 4, **dadurch gekennzeichnet, dass** das Polymergranulat als Reststoffe Lösungsmittel und/oder Monomere und/oder Oligomere und/oder Nebenprodukte der Polymersynthese enthält.

6. Verfahren nach einem der Ansprüche 1 bis 5, **dadurch gekennzeichnet, dass** die Behandlung der Polymergranulate so lange durchgeführt wird, bis der gewünschte Restgehalt der Reststoffe oder eines bestimmten Reststoffes erreicht ist.

7. Verfahren nach Anspruch 6, **dadurch gekennzeichnet, dass** als Poly(arylether)sulfone insbesondere die Haupttypen PSU, PESU und PPSU eingesetzt werden.

8. Verfahren nach einem der Ansprüche 1 bis 5,
**dadurch gekennzeichnet, dass** der Reststoff ein Lösungsmittel oder Lösungsmittelgemisch ausgewählt aus der Gruppe N-Methylpyrrolidon, N-Ethylpyrrolidon, Sulfolan, Dimethylformamid, Dimethylsulfoxid, Dimethylacetamid, und 1,2-Dichlorbenzol ist.

9. Verfahren nach einem der Ansprüche 5 bis 8,
**dadurch gekennzeichnet, dass** bei lösemittelhaltigen Polymergranulaten die Behandlung im Wirbelbett so lange durchgeführt wird, bis ein Reststoffgehalt von < 10 ppm, besonders bevorzugt < 5 ppm erreicht ist.

10. Verfahren nach mindestens einem der Ansprüche 1 bis 9, **dadurch gekennzeichnet, dass** das Verfahren mit einer Wirbelschichtanlage durchgeführt wird, die kontinuierlich oder batchweise betrieben wird.

11. Verfahren nach Anspruch 10, **dadurch gekennzeichnet, dass** die Wirbelschichtanlage in mindestens zwei hintereinander geschaltete Wirbelschichtkammern aufgeteilt ist.

## Claims

1. Method for the preparation of purified polymer granules by extraction of residual material containing polymer granules selected from poly(aryl ether)sulfones, polyamides, polyesters, polycarbonates and polyketones, in which the polymer granules are maintained at a temperature of 170 to 225°C in a fluidized bed with superheated steam and carrying out the treatment in the fluidized bed for a period of 2.5 to 10 hours and removing the residuals.

2. Method according to claim 1, **characterized in that** the fluidized bed is maintained at a temperature of 200 to 225°C with superheated steam.

3. Method according to claim 1 or 2, **characterized in that** the treatment is carried out in the fluidized bed over a period of 3.5 to 9 hours.

4. Method according to at least one of claims 1 to 3, **characterized in that** the process is carried out in a fluidized bed plant with movement and turbulence of the granules through the superheated water vapor flowing from below through an inflow base and through the granule bed.

5. Method according to one of claims 1 to 4, **characterized in that** the polymer granulate contains solvents and/or monomers and/or oligomers and/or by-products of polymer synthesis as residual materials.

6. Method according to one of Claims 1 to 5, **characterized in that** the treatment of the polymer granules is carried out until the desired residual content of the residual materials or of a specific residual material is reached.

7. Process according to claim 6, **characterized in that** the main types PSU, PESU and PPSU in particular are used as poly(aryl ether)sulfones.

8. Method according to one of claims 1 to 5, **characterized in that** the residue is a solvent or solvent mixture selected from the group consisting of N-methylpyrrolidone, N-ethylpyrrolidone, sulfolane, dimethylformamide, dimethylsulfoxide, dimethylacetamide and 1,2-dichlorobenzene.

9. Method according to any of Claims 5 to 8, **characterized in that**, in the case of solvent-containing polymer granules, the treatment is carried out in a fluidized bed until a residual material content of < 10 ppm, particularly preferably < 5 ppm, is reached.

10. Method according to at least one of claims 1 to 9, **characterized in that** the process is carried out with a fluidized bed plant which is operated continuously or batchwise.

11. Process according to claim 10, **characterized in that** the fluidized bed plant is divided into at least two fluidized bed chambers connected in series.

## Revendications

1. Procédé de fabrication d'un granulé polymère purifié, par extraction d'un granulé polymère contenant un résidu, choisi parmi les poly(aryléther)sulfones, les polyamides, les polyesters, les polycarbonates et les polycétones, dans lequel on maintient le granulé polymère dans un lit fluidisé à une température de 170 à 225 °C à l'aide de vapeur d'eau surchauffée, on met en oeuvre le traitement en lit fluidisé sur une durée de 2,5 à 10 h, et on élimine les résidus.

2. Procédé selon la revendication 1, **caractérisé en ce qu'**on maintient le lit fluidisé à une température de 200 à 225 °C à l'aide de vapeur d'eau surchauffée.

3. Procédé selon la revendication 1 ou 2, **caractérisé en ce que** le traitement en lit fluidisé est mis en oeuvre sur une durée de 3,5 à 9 h.

4. Procédé selon au moins l'une des revendications 1 à 3, **caractérisé en ce que** le procédé est mis en oeuvre dans une installation à lit fluidisé, avec mise en mouvement et fluidisation des granulés, sous l'effet de la vapeur d'eau surchauffée, venant par en-dessous et passant par un distributeur, et s'écoulant dans le lit de granulés.

5. Procédé selon l'une des revendications 1 à 4, **caractérisé en ce que** le granulé polymère contient, en tant que résidus, des solvants et/ou des monomères et/ou des oligomères et/ou des sous-produits de la synthèse du polymère.

6. Procédé selon l'une des revendications 1 à 5, **caractérisé en ce que** le traitement des granulés polymères est mis en oeuvre jusqu'à ce que soit atteinte la teneur résiduelle souhaitée en les résidus ou en un certain résidu.

7. Procédé selon la revendication 6, **caractérisé en ce qu'**on utilise en tant que poly(aryléther)sulfones en particulier les types principaux PSU, PESU et PPSU.

8. Procédé selon l'une des revendications 1 à 5, **caractérisé en ce que** le résidu est un solvant ou un mélange de solvants choisis dans le groupe consistant en la N-méthylpyrrolidone, la N-éthylpyrrolidone, le sulfolane, le diméthylformamide, le diméthylsulfoxyde, le diméthylacétamide, et le 1,2-dichlorobenzène.

9. Procédé selon l'une des revendications 5 à 8, **caractérisé en ce que**, dans le cas de granulés polymères contenant un solvant, on poursuit le traitement en lit fluidisé jusqu'à atteindre une teneur en résidus < 10 ppm, d'une manière particulièrement préférée < 5 ppm.

10. Procédé selon au moins l'une des revendications 1 à 9, **caractérisé en ce qu'**on met en oeuvre le procédé avec une installation à lit fluidisé qui est exploitée en continu ou par lots.

11. Procédé selon la revendication 10, **caractérisé en ce que** l'installation à lit fluidisé est subdivisée en au moins deux chambres à lit fluidisé montées l'une derrière l'autre.
